# EUROPEAN PATENT APPLICATION

(11) **EP 1 511 105 A1**
(43) Date of publication of application: **02.03.2005**
(21) Application number: 04028092.7
(22) Date of filing: 09.03.2001
(51) Int. Cl.: H01M 8/02, H01M 8/24

(54) **End plates and current collector plates for fuel cells**

(30) Priority: 15.03.2000 GB 0006125
(62) Divisional of application: 01910041.1
(71) Applicant: Ineos Chlor Enterprises Limited, Runcorn Cheshire WA7 4JE (DE)
(72) Inventor: Hodgson, David Ronald, Westhoughton Bolton Lancs BL5 2RU (GB); May, Barrett, Northwich Cheshire CW8 4TF (GB)
(74) Representative: Collingwood, Anthony Robert

(57) **Abstract**

A fuel cell stack has at least one end and/or current-collecting plate which includes a substrate coated with an electrocatalytically-active material, preferably comprising ruthenium oxide and optionally ruthenium oxide and a non-noble metal oxide.

## Description

The present invention relates to fuel cells.

A fuel cell is an electrochemical device in which electricity is produced without combustion of fossil fuel.

In a fuel cell a fuel, which is typically hydrogen, is oxidised at a fuel electrode (anode) and oxygen, typically from air, is reduced at a cathode to produce an electric current and form byproduct water. An electrolyte is required which is in contact with both electrodes and which may be alkaline or acidic, liquid or solid. Heat and water are the only byproducts of the electrochemical reaction in fuel cells wherein the fuel is hydrogen. Accordingly, the use of such cells in power generation offers potential environmental benefits compared with power generation from combustion of fossil fuels or by nuclear activity.

In proton-exchange membrane fuel cells, hereinafter referred to for convenience as "PEM" fuel cells, the electrolyte is a solid polymer membrane which allows transport of protons from the anode to the cathode and is typically based on perfluorosulphonic acid materials. The electrolyte must be maintained in a hydrated form during operation in order to prevent loss of ionic conduction through the electrolyte.

A PEM fuel cell typically comprises two electrodes, an anode and a cathode, separated by a protonexchange membrane electrolyte. At the anode, hydrogen fuel catalytically dissociates into free electrons and protons. The free electrons are conducted in the form of usable electric current through the external circuit with which the fuel cell is in electrical contact. The protons migrate through the membrane electrolyte to the cathode where they combine with oxygen from the air and electrons from the external circuit to form water and generate heat. Individual fuel cells may be combined into assemblies which are often referred to in the art as stacks to provide the amount of power required.

According to the present invention there is provided a fuel cell stack comprising a plurality of individual fuel cell units and end plates and/or current-collecting plates, characterised in that at least one of said end and/or current-collecting plates includes a substrate with a coating of an electrocatalytically-active material as hereinafter defined.

Usually the end and/or current-collecting plates of the fuel cell stack will be provided with means for collecting current generated during operation of the stack, means for controlling fluid distribution within the interior of the stack, means for use in applying clamping forces to the stack and means for the supply and removal of fluids from the stack.

The substrate may be provided with fluid flow channels. For example, the end and/or current-collecting plate(s) provided with such coating may be of a monolithic or unitary construction incorporating fluid flow channels as well as acting as a current collector.

Alternatively the end and/or current-collecting plate(s) provided with such coating may be of a composite structure including said substrate and a further plate or sheet of material provided with fluid flow channels. For example, the end and/or current-collecting plate may comprise substrate having no surface features from the standpoint of fluid flow within the stack and a separate layer of material provided with surface features for fluid flow, e.g. a graphitic material such as Grafoil which is available commercially from UCAR Carbon Company Inc of Cleveland, Ohio.

Where the end and/or current-collecting plates are of composite construction including a separate layer provided with the fluid flow channels, only the substrate need be provided with said coating, although we do not exclude the possibility that the separate layer may also be coated with said electrocatalytically-active material.

The means for collecting current and/or the means for supply and removal of fluids may be coated with said electrocatalytically-active material.at least in part. For example, each end and/or current-collecting plate may be provided with fluid feed and withdrawal conduits connected thereto and the coating may penetrate into such conduits so that internal surfaces of such conduits are coated with said electrocatalytically-active material.

The stack may also include one or more separator plates located between successive fuel cell units of the stack and serving to conduct current from the anode of one cell unit to the cathode of the adjacent cell unit and/or channel fluid flow associated with the fuel cell units, at least one of the separator plates including a substrate with a coating of an electrocatalytically-active material as hereinafter defined.

The separator plate(s) provided with said coating may be of monolithic or composite structure as referred to above.

Typically the end and/or current-collecting plates are of greater thickness than the separator plates; for example the separator plates may comprise a substrate having a thickness ranging from 0.5 to 2000 microns (e.g. 10 to 1000 microns and typically 20 to 750 microns, eg. 20 to 350 microns) whereas the the thickness of the thicker end and/or current collecting plates may be at least 0.3 mm, e.g. from 0.5 mm up to 10 mm or greater and typically from 1 mm up to 10 mm or greater.

The separator plates may comprise a metal substrate in the form of a metal foil, e.g. a titanium, titanium alloy, aluminium, aluminium alloy or stainless steel foil, e.g with a thickness of 500 microns or less.

The end and/or current-collecting plates may each provided with at least one stack-supporting projection for contact with a surface on which the fuel cell is to be stood whereby the fuel cell units and separator plates are supported through the end and/or current-collecting plates in spaced relation above the support surface. The projection or projections may be constituted at least in part by an end and/or current-collecting plate portion or portions extending beyond the outer peripheries of the fuel cell units and separator plates. Whilst not strictly necessary, the projections of the end and/or current-collecting plates may also be coated with said coating of an electrocatalytically-active material as herein defined so as to avoid having to selectively coat the end and/or current-collecting plates. Thus, for example, each end and/or current-collecting plate may have a greater areal extent than the cross-sectional area of the fuel cell units of the stack and that face of the end and/or current-collecting plate which is exposed to the interior of the stack may be coated over its entire surface including those regions thereof which are not exposed to the stack interior, such regions being associated with said support projections and/or projections (e.g. tabs) for connection to current collection means.

Preferably the fuel cell stack includes cooling means for removal of heat generated during operation since proton-exchange membranes tend to be sensitive to high temperatures. Thus, at least some of separator plates within the stack may be provided with coolant-conducting passageways for the passage of gaseous or liquid coolant (e.g. air or water). Each separator plate may be provided with such coolant-conducting passageways but, often, only every nth plate is so equipped (where n is typically 3 or 4). Alternatively coolant may be brought into heat exchange relation with the interior of the fuel cell stack by means of separate cooling sections located at one or more points within the stack structure or by means of a coolant jacket or jackets (using water as the coolant for example). Examples of cooling of fuel cell stacks are disclosed for instance in WO-A-95/16287 (Ballard).

The fuel stack preferably also incorporates sealing gaskets interleaved between adjacent end and/or current-collecting plates and other components of the fuel cell stack so as to seal the active interior of the fuel cell stack.

The invention may be said to reside in the recognition that the electrical conductivity of the end and/or current-collecting plates and optionally the separator plates of a fuel cell stack can be increased by providing them with a coating of an electrocatalytically-active material. The electrocatalytically active coating may also serve to impart corrosion resistance to the plate(s).

By "electrocatalytically-active material" we mean a material which where used as an electrode or coating therefor catalyses electrochemical reactions at high current densities at potentials close to the equilibrium potential as is more fully described by R Greef *et al* in "Instrumental Methods in Electrochemistry", Ellis Horwood, 1990 and by D Pletcher et al in "Industrial Electrochemistry", Chapman and Hall, 1990.

Thus by providing said coating on the end and/or current-collecting plate(s), and optionally also the separator plate(s), high electrical conductivity and hence high operational fuel cell efficiency can be achieved at relatively low cost. In this context, fuel cell stack end and/or current-collecting plates are conventionally fabricated from stainless steel carrying a gold-plated layer to secure good conductivity, it being usually necessary to provide an intermediate layer of for example nickel between the stainless steel substrate and the gold layer in order to secure good bonding of the gold to the end plate. Apart from the expense of providing the stainless steel with a gold-plated layer, the use of nickel is undesirable especially in the case of PEM fuel cells because nickel is a poison for the membrane materials commonly in use.

The fluid flow channels associated with the end and/or current-collecting plate(s) and/or separator plate(s) typically comprise surface features, for example an in-plane non-uniform structure, which may be regular or irregular, e.g. a series of corrugations or a serpentine pattern, to afford gas flow channels which ensure essentially even distribution of fuel, e.g. input gases, over the electrode surfaces and facilitate transport of by-products, e.g. water, therefrom.

Such surface features may be formed by techniques well known to those skilled in the art, for example embossing, etching or die-casting.

In the fuel cell stack according to the present invention the plurality of cell units may be connected in bipolar or monopolar configuration as is more fully described by Kordesch and Simader in "Fuel Cells and their Applications". VCH. 1996 at 49-50, the description in which is incorporated herein by way of reference.

Also in accordance with the invention there is provided an end and/or current-collecting plate for use in current collection in a fuel cell stack, characterised in that it includes a substrate with a coating of an electrocatalytically-active material as hereinbefore defined.

In a more specific aspect of the invention there is provided fuel cell stack comprising a plurality of individual fuel cell units each comprising an anode, a cathode and ion exchange membrane disposed between the anode and the cathode, a plurality of separator plates located between the anode of one unit and the cathode of an adjacent unit, and a pair of current collecting end plates located one at each end of the stack, characterised in that at least one of the end plates, and optionally at least one of the separator plates, includes a substrate with a coating of an electrocatalytically-active material as hereinbefore defined.

The stack may for example further comprise means for feeding a fluid fuel stream and a fluid oxidant stream to each fuel cell unit for conversion to reaction products and electrical energy; for example the stack may include means for feeding gaseous hydrogen fuel to the anodes and means for feeding an oxygen-containing gas to the cathodes.

The anode and cathode in each fuel cell unit may be discrete components but are preferably provided as integral parts of a single unit as is more fully described in WO 95/16287.

According to another aspect of the present invention there is provided a fuel cell stack comprising:
a) a plurality of fuel cell units each of which contains a proton-exchange membrane separating the cell into anolyte and catholyte chambers and provided with an anode and a cathode on opposite sides thereof;
b) a separator plate disposed between adjacent cell units;
c) end and/or current-collecting plates associated with the stack;
d) means for feeding hydrogen fuel to the anolyte chambers of the stack; and
e) means for feeding an oxygen-containing gas to the catholyte chambers of the stack;
characterised in that at least one end and/or current-collecting plate, and optionally at least one separator plate, includes a substrate with a coating of an electrocatalytically-active material as hereinbefore defined.

Hydrogen fuel for use in the fuel cell stack according to this aspect of the invention may be obtained from, for example, natural gas or methanol, while the oxygen containing gas may comprise air.

The fuel cell stack according to the present invention in all aspects thereof is connected to an external circuit via the current-collecting plates.

Although certain aspects of the invention are concerned with fuel cell units including ion exchange membranes, it will be understood that the present invention also finds application to liquid electrolyte fuel cells such as phosphoric acid and so-called "direct methanol" fuel cells.

The electrocatalytically-active coating employed in the present invention is typically derived from a metal, metal oxide or mixtures thereof from Group 8 of the Periodic Table of Elements, namely Fe, Co, Ni, Ru, Rh, Pd, Os, Ir and Pt.

Suitable electrocatalytically-active coatings comprising mixtures of platinum group metal and platinum group metal oxide are described in our EP-A-0129374.

Suitable electrocatalytically-active coatings comprising mixtures of ruthenium oxide, non-noble metal oxide and noble metal or oxide thereof are described in our EP-A-0479423.

Suitable electrocatalytically-active coatings comprising mixtures of cerium oxide and at least one non-noble Group 8 metal are described in our EP-A-0546714.

The electrocatalytically-active coating is preferably ruthenium oxide or mixtures of ruthenium oxide with at least one of PtO, Sb₂O₃, Ta₂O₅, PdO, CeO₂ or preferably a mixture of RuO₂ with at least one of TiO₂, SnO₂, IrO₂.

Where the electrocatalytically-active coating comprises a mixture of ruthenium oxide and another oxide the content of the ruthenium oxide may be in the range 0 - 100 mol %, e.g. 0.05 - 90 mol %, and typically 5 - 90 mol %.

The thickness of the electrocatalytically-active coating on the plate may be in the range 0.5 - 400 gm-², and typically 1 - 90 gm-².

We do not exclude the possibility that the electrocatalytically-active coating may comprise an intermediate layer between the substrate and the outer layer. As examples of such intermediate layers may be mentioned *inter alia* the heat-treated niobium oxide layer and the tantalum layer described in EP-A-052986 and EP-A-0107934 respectively.

Where the coating comprises ruthenium oxide it may comprise a plurality of different layers. for example a layer of RuO₂/TiO₂ and a layer of RuO₂/SnO₂.

The substrate to which the coating is applied may typically be a metal chosen from Ti. V, Cr. Mn, Fe, Co, Ni, Cu, Zr, Nb, Ag, Pt, Ta, Pb, Al, or alloys thereof, preferably titanium, aluminium or stainless steel.

However. we do not exclude the possibility that the substrate may be formed from a non-metallic material, for example graphite, carbon-fibre paper, carbon-fibre cloth, Ebonex (RTM), or an organic polymeric material. e.g. carbon-filled polypropylene.

The electrocatalytically-active coatings may be applied to the substrate by, for instance, painting (e.g. by brushing or electrostatic spraying) of a solution of precursors followed by thermal decomposition, thermal spraying, screen-printing of metal alloy, Physical Vapour Deposition (PVD), Chemical Vapour Deposition (CVD), electroplating, electroless plating or spray pyrolysis.

Application of an electrocatalytically-active coating comprising an outer layer of ruthenium oxide and non-noble metal oxide to a substrate by PVD is more fully described in our WO 95/05499.

Application of an electrocatalytically-active coating comprising an outer layer of ruthenium oxide and non-noble metal oxide to a substrate by thermal spraying is more fully described in our WO 95/05498.

Application of an electrocatalytically-active coating comprising an outer layer of (a) cerium and/or cerium oxide and at least one non-noble Group 8 metal or (b) platinum and/or platinum oxide and ruthenium and/or ruthenium oxide by PVD is more fully described in our WO 96/24705.

We do not exclude the possibility that different coatings may be applied to different surfaces, e.g. oppositely facing surfaces, of the substrate especially in the case of the separator plates.

The surfaces to be coated may be quite complex, e.g. it may be desirable for the coating to be applied to internal surfaces within pipework connected to the end and/or current-collecting plates, particularly pipework for conducting fluids to and/or from the stack. The coating technique employed may therefore be selected with regard to the nature, particularly the topology, of the surface area to be coated. For complex topologies, coating by immersion techniques may be preferable to those involving "line of sight" application.

It will be appreciated that in the fuel cell stack according to various aspects of the present invention the components thereof may be provided with aligned ports, e.g. slots, to form a manifold to allow flow of fuel gas and oxidant gas trom the means to feed such gases to the cell units to the anodes and cathodes respectively.

The present invention will now be described further by way of example only with reference to the accompanying drawing, in wihich:
Figure 1 is an exploded perspective view of a fuel cell stack of the ion exchange membrane type with only a limited number of cell units illustrated for simplicity; and
Figure 2 is a diagrammatic view of the fuel cell stack showing the provision of supporting projections on the end plates.

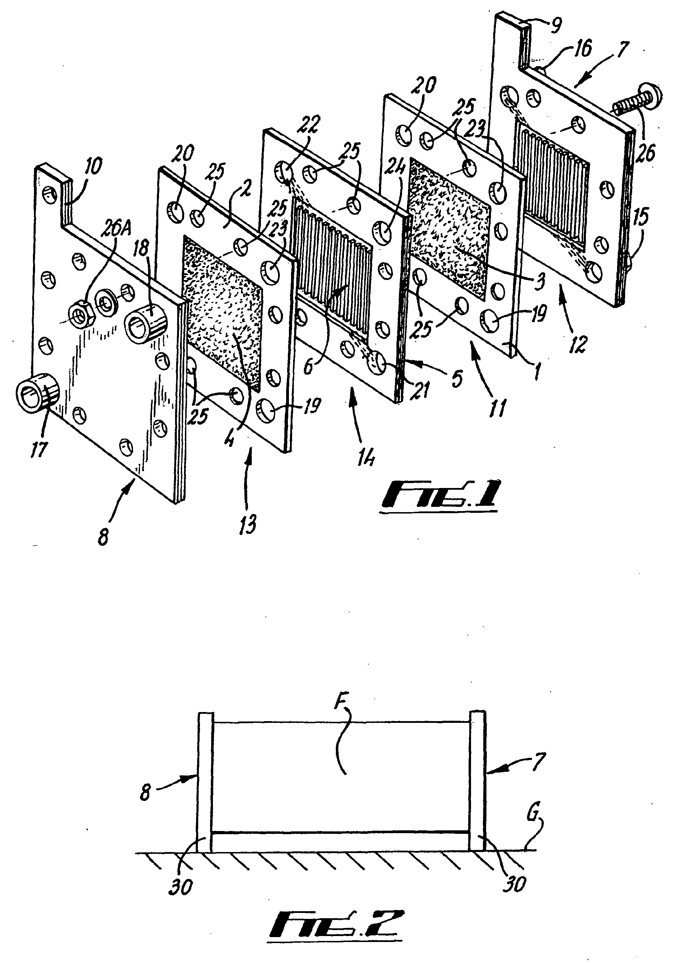

Referring to Figure 1, ion-permeable membranes 1 and 2 have cathode electrodes 3 and 4 respectively and anode electrodes (not shown), bonded to each of their major surfaces. Each membrane 1, 2 and its associated anode and cathode forms a fuel cell unit. A bipolar separator plate 5, provided with surface features 6, is disposed between ion-permeable membranes 1 and 2 in contact with the electrode surfaces thereof. Terminal plates 7 and 8, provided with terminals in the form of tabs 9 and 10 for delivering electric current generated in the cell stack to an external circuit, are disposed adjacent membranes 1 and 2 respectively. In the illustrated embodiment, only one bipolar separator plate 5 is shown. In practice, there will usually be a plurality of bipolar separator plates each associated with adjacent pairs of fuel cell units.

In the stack, membrane 1 is held firmly between terminal plate 7 and bipolar plate 5 so as to from an oxidant gas chamber 11 and a fuel gas chamber 12. In like manner, membrane 2 is held firmly between terminal plate 8 and bipolar plate 5 so as to from an oxidant gas chamber 13 and a fuel gas chamber 14.

Hydrogen fuel is supplied to the anodes in the fuel gas chambers 12 and 14 via fuel gas inlet conduit 15 and by-products removed via conduit 16. Oxidant gas is supplied to cathodes 3 and 4 in the oxidant gas chambers 11 and 13 via oxidant gas inlet conduit 17 and by-products removed via conduit 18. Openings 19 and 20 located in opposite comers of membranes 1 and 2 are aligned with hydrogen gas inlet and outlet conduits 15 and 16 and with openings 21 and 22 in bipolar plate 5 to facilitate passage of hydrogen fuel gas into the fuel chambers 12 and 14 and to remove by-products therefrom.

Openings, not shown, and openings 23 located in opposite comers of membranes 1 and 2 are aligned with oxidant inlet and outlet conduits 17 and 18 and with opening 24 and another not shown in bipolar plate 5 to facilitate passage of oxidant gas into the oxidant chambers 11 and 13 and to remove by-products therefrom.

End plates 7 and 8, membranes 1 and 2 and bipolar plate 5 are each provided with a plurality of openings 25 through which assembly tie-rods 26 (one only of which is illustrated in part) pass and engage with nuts 26A so that the fuel cell units and bipolar separator plates are clamped between the end plates 7 and 8. Though not illustrated, sealing gaskets will be interleaved with the membrane carrying plates 1 and 2, the bipolar plates 5 and the end plates 7 and 8 to seal the active interior of the fuel cell stack.

The end plates 7, 8 and the bipolar plate 5 all carry a coating of electrocatalytically active material as defined herein in order to enhance conductivity and, in some cases, depending on the nature of the electrolyte for instance may impart corrosion resistance properties to the plates. The coating may also be applied to the internal surfaces of the conduits and also to the tabs 9 and 10. Such coating may be effected during the coating of the end or terminal plates 7, 8. In the case of the end plates 7, 8 only those faces which are presented towards the interior of the fuel cell stack need be coated in practice. However, for simplicity of coating, the entire face of the end plate may be so coated, including the borders which are not actually exposed to the interior of the fuel cell stack during operation.

Although not shown, the stack is desirably provided with cooling means for dissipating at least part of the heat generated during operation. Such cooling means may be implemented by adapting one or more of the separator plates or inclusion of suitable elements within the stack so as to incorporate coolant passageways which are in heat exchange relation with the active interior of the fuel cell stack and through which a coolant fluid such as water or air can be passed, the interiors of the fluid coolant passageways being isolated from the interior of the fuel cell stack.

As shown in Figure 2, the end plates 7 and 8 are of greater cross-sectional area than the remaining plates forming the fuel cell stack F so as to provide a projection or projections 30 (which may be integral with the substrate material of the end plates) for engagement with a surface G on which the fuel cell stack is supported in use. If desired, the supporting projections 30 may also carry a coating of electrocatalytically active material as defined herein so as to simplify the coating process by eliminating the need to effect selectvie coating of the end plates.

In the illustrated embodiment, the end plates 7, 8 *per se* are used as part of the means to apply compression to the stack; in a modified embodiment, the current collecting end plates and other plates forming the fuel cell stack may be located inboard of separate compression-applying plates, for example as shown in US-A-5840438 (assignee: Ballard). In this event, the separate compression-applying plates rather than the current collecting plates may be provided with supporting projections as referred to above. Also as disclosed in US-A-5840438, the fuel cell stack may include a humidifying section between the fuel cell units and one of the end plates (or one of the compression-applying plates when present) for the introduction of water vapour into the fuel and oxidant streams fed to the stack.

In a further embodiment of the present invention, a layer of diffusion material which is electrically conducting and porous, for example a carbon-coated paper or a graphite-impregnated polymer film, is disposed in the oxidant gas chambers 11 and 13 and/or in the fuel gas chambers 12 and 14. For example. the layer of diffusion material may be disposed between bipolar plate 5 and the adjacent electrode surfaces of membranes 1 and 2 and/or between the terminal plates 7 and 8 and the adjacent electrode surfaces of membranes 1 and 2.

The present invention is further illustrated by reference to the following Examples.

### Examples 1 and 2

These Examples illustrate the invention by reference to the production of coatings of electrocatalytically-active material comprises ruthenium oxide and titanium oxide. A coating of composition 47.5 mole % ruthenium and 52.4 mole % titanium was prepared by adding tetra-n-butyl titanate (7.47g) to a solution of ruthenium (2g), as ruthenium trichloride, in pentan-1-ol (31 g). In Example 1, a portion of this solution was applied by brush to a titanium substrate which had been etched in 10% oxalic acid solution at 80-85 C for 8 hours . The coated substrate was dried at 180°C and then baked at 450°C; 12 coats were applied in this manner. In Example 2, the procedure of Example 1 was repeated except that the substrate was a 316L stainless steel plate which had been grit blasted.

### Example 3

This example illustrates the application of a coating of electrocatalytically-active material comprising a nickel/cobalt spinel. Co(NO₃)₂.6H₂O and Ni(NO₃)₂.6H₂O total solute concentration of 0.4M and a Co:Ni ratio of 2:1. Five coats of this solution were applied by brush to an etched titanium substrate, each coat being dried for 10 mins. at 180°C. After addition of the last coat the plate was annealed at 350° for 10 hours. The loading of coating, a mixed cobalt/nickel oxide on the substrate was 2.5g/m²

### Examples 4-6

These Examples the application of a coating of electrocatalytically-active material comprises ruthenium oxide and tin oxide (Examples 4 and 5) and ruthenium oxide, tin oxide and iridium oxide (Example 6). In these Examples the coating was applied to a stainless steel (SS) substrate by physical vapour deposition (PVD) which is more fully described in our WO 96/24705, the disclosure in which is incorporated herein by way of reference. The SS substrates were degreased ultrasonically in Arklone (RTM), then:
in Example 4 the stainless steel substrate was not subjected to any further pre-treatment;
in Example 5 the stainless steel substrate was pre-treated by grit blasting and etching in 10% oxalic acid solution by making cathodic for up to 10 mins. at 4-5 volts; and
in Example 6 the stainless steel substrate was pre-treated by etching in 10% oxalic acid solution by making cathodic for up to 10 mins. at 4-5 volts.

The coatings were applied to the substrates using a Ru/Sn source (Examples 4 and 5) or a Ru/Sn/Ir source as described in our WO 96/24705. The loading of coating on the substrate was 35g/m².

### Example 7

This Example illustrates the application of a coating of electrocatalytically-active material comprising cerium oxide. A titanium substrate was etched and the coating was applied thereto by plasma spraying a cerium/nickel powder as is more fully described in our EP-A-0546 714, the disclosure in which is incorporated herein by way of reference. The loading of coating on the substrate was 380g/m².

### Example 8

This Example illustrates the application of a coating of electrocatalytically-active material comprising ruthenium and tin. An etched titanium plate and a platinum electrode were immersed in a solution of ruthenium trichloride (58 g) and stannous trichloride (205g) in 6M hydrochloric acid (1000 ml). With the titanium plate as cathode an electric current was applied to the solution, equivalent to 0.5 kA/m2 for 30 mins. The loading of the Ru/Sn coating on the titanium substrate was 1.5 g/m².

### Example 9-10

These Examples illustrate the application of a coating of electrocatalytically-active material comprises ruthenium oxide and platinum oxide. In Example 9, the substrate was a titanium plate. In Example 10. the substrate was a stainless steel plate. Five coats of a solution of RuCl₃ (7.4 g) and H₂PtCl₆ (22.2 g) in a mixture of acetic acid (100 ml) and hydrochloric acid (900 ml) were applied by brush to the substrates. Each coat was dried at 180°C for 10 mins and then fired at 450°C for 20 mins. After the final coat had been fired, the coated plate was heated in air for 1 hour at 450°C. The loading of platinum on the substrates was 1.5 g/m².

### Examples 11-12

These Examples illustrate the application of coatings to non-metallic substrates. In these Examples, the substrate was Ebonex (RTM). The substrates were cleaned ultrasonically in IPA, air dried and heated at 180°C for 10 mins. In Example 11 the electrocatalytically-active coating comprised platinum oxide and iridium oxide in weight ratio 70:30 and the loading of the coating was 1.5g/m². The coating was prepared by applying six coats of a solution of H₂IrCl₆ (11.9 g) and H₂PtCl₆ (32.6 g) in pentanol (1000 ml) by brush to the substrates. Each coat was dried at 180°C for 10 mins and then fired at 500°C for 20 mins. After the final coat had been fired the coated plate was heated in air for 1 hour at 450°. In Example 12, the electrocatalytically-active coating comprised ruthenium oxide and titanium oxide in weight ratio 35:65 and the loading ofthe coating was 20g/m². The coating was prepared as described in Examples 1-2 except that 6 coats of the solution were applied instead of 5 coats.

## Claims

1. A fuel cell stack comprising a plurality of individual fuel cell units and end plates and/or current-collecting plates, **characterised in that** at least one of said plates includes a substrate with a coating of an electrocatalytically-active material as herein defined..

2. A stack as claimed in Claim 1 in which the cell units are connected in a monopolar or bipolar configuration.

3. A stack as claimed in Claim 1 or 2, the plate having a fluid inlet aperture and a fluid outlet aperture and being provided with surface features forming channels for conducting fluid flow from the inlet aperture to the outlet aperture.

4. A stack as claimed in Claim 3 in which the plate is a current-collecting end plate.

5. A stack as claimed in any one of Claims 1 to 4 including at least one intermediate separator plate operable in use to conduct current from the anode of one fuel cell unit to the cathode of the adjacent fuel cell unit and/or distribute fluid flow in the fuel cell stack, said separator plate(s) comprising a substrate with a coating of an electrocatalytically-active material as herein defined.

6. A plate for a fuel cell stack, the plate having fittings or terminals for connection to an external electrical circuit to which energy generated by the stack is to be supplied, **characterised in that** the plate comprises a substrate with a coating of an electrocatalytically-active material as herein defined.

7. A plate as claimed in Claim 6, the plate being provided with pipework for conducting fluids to and/or from the stack.

8. A plate as claimed as claimed in Claim 7 in which the internal surfaces of the pipework are at least in part coated with said coating.

9. A stack or plate as claimed in any one of Claims 3 to 8 in which inlet and outlet apertures are located at opposite sides of the coated plate(s) and surface features forming channels for conducting fluid flow from the inlet aperture to the outlet aperture are located in the region of the plate extending between the inlet and outlet apertures.

10. A stack or plate as claimed in Claim 3 or 9 in which the surface features comprise a series of corrugations.

11. A stack or plate as claimed in Claim 3 or 9 in which the surface features comprise a serpentine pattern.

12. A stack or plate as claimed in Claim 3 or 9, the surface features being embossed, etched, engraved, moulded, stamped or die cast.

13. A stack or plate as claimed in Claim 9, the coated plate(s) having a further fluid inlet aperture and a further fluid outlet aperture and being provided on its opposite face with surface features forming channels for conducting fluid flow from the further inlet aperture to the further outlet aperture.

14. A stack or plate as claimed in any one of Claims 1 to 13 further **characterised in that** the substrate is metallic.

15. A stack or plate as claimed in any one of Claims 1 to 14 in which the plate is of monolithic structure.

16. A stack or plate as claimed in any one of Claims 1 to 14 in which the plate is of composite structure.

17. A stack or plate as claimed in any one of Claims 1 to 16 further **characterised in that** the electrocatalytically-active material comprises one or more platinum group metals, or oxides thereof.

18. A stack or plate as claimed in any one of Claims 1 to 16 further **characterised in that** the electrocatalytically-active material comprises cerium or or an oxide thereof.

19. A stack or plate as claimed in any one of Claims 1 to 16 further **characterised in that** the electrocatalytically-active material comprises ruthenium or an oxide thereof.

20. A stack or plate as claimed in Claim 19 in which the electrocatalytically-active material further comprises at least one other metal oxide, optionally a non-noble metal oxide.

21. A stack or plate as claimed in Claim 19 in which the electrocatalytically-active material further comprises at least one metal or metal oxide from Group 8 of the Periodic Table of Elements.

22. A stack or plate as claimed in Claim 19 in which the electroactively-active material further comprises at least one of PtO, Sb₂O₃, Ta₂O₅, PdO, CeO₂, Co₃O_{4,} TiO_{2,} SnO₂ and IrO₂.

23. A stack or plate as claimed in Claim 19 in which the electroactively-active material further comprises, in addition to ruthenium oxide, TiO₂.

24. A stack or plate as claimed in Claim 19 in which the electroactively-active material further comprises, in addition to ruthenium oxide, SnO₂.

25. A stack or plate as claimed in Claim 19 in which the electroactively-active material further comprises, in addition to ruthenium oxide, IrO₂.

26. A PEM, phosphoric acid or direct methanol fuel cell assembly including at least one end plate and/or current-collecting plate comprising a substrate with a coating of ruthenium or its oxide and a metal or oxide of a metal selected from the group comprising Sn, Fe, Co, Ni or Os, preferably Sn.

27. A stack or plate as claimed in any one of Claims 1 to 26 in which the substrate of the plate is a metal chosen from Ti, V, Cr, Mn, Fe, Co, Ni, Cu, Zr, Nb, Ag, Pt, Ta, Pb, Al or alloys thereof.

28. A stack or plate as claimed in any one of Claims 1 to 26, the plate being of aluminium or an alloy thereof.

29. A stack or plate as claimed in any one of Claims 1 to 26, the substrate of the plate being of titanium or an alloy thereof.

30. A stack or plate as claimed in any one of Claims 1 to 26, the substrate of the plate being of iron or an alloy thereof.

31. A stack as claimed in any one of Claims 1 to 4 and 9 to 30 in which only the end and/or current-collecting plates are provided with said coating.

32. A fuel cell stack comprising a plurality of individual fuel cell units each comprising an anode, a cathode and ion exchange membrane disposed between the anode and the cathode, a plurality of separator plates located between the anode of one unit and the cathode of an adjacent unit, and end plates and/or current collecting plates, **characterised in that** at least one of the end and/or current collecting plates, and optionally at least one of the separator plates, includes a substrate with a coating of an electrocatalytically-active material as herein defined.

33. A fuel cell stack comprising:
a) a plurality of fuel cell units each of which contains a proton-exchange membrane separating the cell into anolyte and catholyte chambers and provided with an anode and a cathode on opposite sides thereof;
b) a separator plate disposed between adjacent cell units;
c) end and/or current-collecting plates associated with the stack;
d) means for feeding hydrogen fuel to the anolyte chambers of the stack; and
e) means for feeding an oxygen-containing gas to the catholyte chambers of the stack;
**characterised in that** at least one of said end and/or current-collecting plates, and optionally at least one separator plate, includes a substrate with a coating of an electrocatalytically-active material as herein defined.

34. A fuel cell stack as claimed in any one of Claims 1 to 5 and 9 to 33, being a phosphoric acid fuel cell or a direct methanol fuel cell.

35. A fuel cell stack as claimed in any one of Claims 1 to 5 and 9 to 34 including means for cooling the interior of the stack

36. A fuel cell stack as claimed in any one of Claims 1 to 5 and 9 to 35 in which the end and/or current-collecting plates are provided with projections for engagement with a support surface to support the remainder of the stack in spaced relation with the surface.

37. A fuel cell stack as claimed in any one of Claims 1 to 5 and 9 to 36 in which the end and/or current-collecting plates comprise the primary means for the application of compression to the stack.

38. A fuel cell stack as claimed in any one of Claims 1 to 5 and 9 to 37 in which compression is applied to the end plates and to the remainder of the stack by means of compression-applying plates located outboard of the end plates.

39. A fuel cell stack as claimed in any one of Claims 1 to 5 and 9 to 38 in which the end plates are thicker than the separator plates.

40. A fuel cell stack as claimed in any one of Claims 1 to 5 and 9 to 39 including humidifying means for introducing water vapour into the fuel and oxidant streams supplied to the stack.
